# EUROPEAN PATENT APPLICATION

(11) **EP 4 700 154 A1**
(43) Date of publication of application: **25.02.2026**
(21) Application number: 25193684.5
(22) Date of filing: 04.08.2025
(51) Int. Cl.: C25B 1/04, C25B 15/025, C25B 15/033, C25B 15/08

(54) **CONTAMINATION MITIGATION SYSTEM FOR USE IN AN ELECTROLYSIS SYSTEM**

(30) Priority: 15.08.2024 US 202463683320 P
(71) Applicant: New Hydrogen IP, LLC, Columbus, Indiana 47201 (US)
(72) Inventor: St-Pierre, Jean, Indianapolis, 46237 (US)
(74) Representative: Marks & Clerk Cummins

(57) **Abstract**

An electrolysis system includes an electrolyzer stack and a contamination mitigation system. The electrolyzer stack includes an injection port fluidly connected with a cathode compartment of the electrolyzer stack. The contamination mitigation system is configured to remove ions from the electrolyzer stack to mitigate ion contamination in the electrolyzer stack. The contamination mitigation system includes a storage tank including formic acid therein and an injection line fluidly coupled between the storage tank and the injection port. The injection line is configured to direct the formic acid from the storage tank to the injection port for injection into the cathode compartment of the electrolyzer stack.

## Description

### CROSS-REFERENCE TO RELATED APPLICATIONS

This nonprovisional application claims the benefit and priority, under 35 U.S.C. § 119(e) and any other applicable laws or statutes, to U.S. Provisional Patent Application Serial No. 63/683,320 filed on August 15, 2024, the entire disclosure of which is hereby expressly incorporated herein by reference.

### TECHNICAL FIELD

The present disclosure relates to a contamination mitigation system for use in an electrolysis system and methods of using the contamination mitigation system.

### BACKGROUND

Electrolysis systems are known for their efficient use of water and electricity to produce hydrogen and oxygen. Contaminants and/or impurities may be detrimental to operation of the electrolysis system. Generally, contaminants and/or impurities may be removed from the electrolysis system with a passive filter and/or a deionizer. However, such means may be insufficient to guarantee electrolyzer cell operation over an extended period of time without multiple maintenance cycles or reducing hydrogen and oxygen costs. Thus, it may be advantageous to more efficiently remove contaminants and/or impurities from electrolysis systems.

The present disclosure is directed to a contamination mitigation system for use in an electrolysis system and methods of using the contamination mitigation system to remove contaminants and/or impurities from the electrolysis system.

### SUMMARY

Embodiments of the present disclosure are included to meet these and other needs.

In one aspect described herein, an electrolysis system comprises an electrolyzer stack and a contamination mitigation system. The electrolyzer stack includes an injection port fluidly connected with a cathode compartment of the electrolyzer stack. The contamination mitigation system is configured to remove ions from the electrolyzer stack to mitigate ion contamination in the electrolyzer stack. The contamination mitigation system includes a storage tank including formic acid therein, an injection line fluidly coupled between the storage tank and the injection port, and a pump coupled to the injection line and configured to direct the formic acid to the injection port from the storage tank for injection into the cathode compartment of the electrolyzer stack.

In some embodiments, the contamination mitigation system may further include a mixer located downstream of the storage tank and configured to receive the formic acid from the storage tank and water from a water tank included in the electrolysis system to dilute the formic acid in the mixer and create a formic acid solution. In some embodiments, the contamination mitigation system may further include a bypass valve located between the storage tank and the mixer. In some embodiments, the injection line may include a first branched injection line configured to direct the formic acid from the storage tank, through the bypass valve, and directly to the injection port without passing through the mixer and a second branched injection line configured to direct the formic acid from the storage tank, through the bypass valve, through the mixer, and to the injection port.

In some embodiments, the electrolysis system may further comprise a control system in communication with the contamination mitigation system and configured to adjust a concentration of the formic acid solution and a sensor in fluid communication with the electrolyzer stack to measure water conductivity data related to water entering the electrolyzer stack. In some embodiments, the control system may be in communication with the sensor to receive the water conductivity data therefrom. In some embodiments, the control system may be configured to adjust the concentration of the formic acid solution based, at least in part, on the water conductivity data.

In some embodiments, the contamination mitigation system may further include a recirculation line extending between an outlet port of the electrolyzer stack and the storage tank and a three-way valve coupled to the recirculation line between the outlet port and the storage tank. In some embodiments, the three-way valve may be configured to direct the formic acid from the outlet port to the storage tank via the recirculation line while the three-way valve is in a first position, and the three-way valve may be configured to direct the formic acid from the outlet port to a high pressure water separator included in the electrolysis system while the three-way valve is in a second position different than the first position.

In some embodiments, the electrolysis system may further comprise a control system in communication with the contamination mitigation system and configured to control injection of the formic acid into the cathode compartment of the electrolyzer stack and a sensor in fluid communication with the electrolyzer stack to measure water conductivity data related to water entering the electrolyzer stack. In some embodiments, the control system may be in communication with the sensor to receive the water conductivity data therefrom. In some embodiments, the control system may be configured to adjust the injection of the formic acid into the cathode compartment based, at least in part, on the water conductivity data.

In some embodiments, the contamination mitigation system may further include a filter located upstream of the storage tank and configured to filter the formic acid. In some embodiments, the storage tank may include a relief valve configured to manage pressure buildup due to decomposition of the formic acid in the storage tank.

In another aspect described herein, a method comprises providing an electrolyzer stack including an injection port fluidly connected with a cathode compartment of the electrolyzer stack, injecting formic acid into the cathode compartment of the electrolyzer stack via the injection port, and removing ions from the electrolyzer stack via the formic acid to mitigate ion contamination in the electrolyzer stack.

In some embodiments, the method may further comprise, before the step of injecting, directing the formic acid from a storage tank toward the cathode compartment of the electrolyzer stack. In some embodiments, the method may further comprise, while a bypass valve located between the storage tank and the injection port is in a first position, directing the formic acid from the storage tank, through the bypass valve, and directly into the cathode compartment of the electrolyzer stack. In some embodiments, the method may further comprise, while the bypass valve is in a second position different than the first position, directing the formic acid from the storage tank, through the bypass valve, and into a mixer.

In some embodiments, the method may further comprise directing water from a water tank into the mixer and diluting the formic acid with the water in the mixer to create a formic acid solution that is injected into the cathode compartment. In some embodiments, the method may further comprise receiving water conductivity data related to water entering the electrolyzer stack and adjusting a concentration of the formic acid solution being injected into the cathode compartment of the electrolyzer stack based, at least in part, on the water conductivity data.

In some embodiments, the method may further comprise receiving water conductivity data related to water entering the electrolyzer stack and adjusting the injection of the formic acid into the cathode compartment of the electrolyzer stack based, at least in part, on the water conductivity data. In some embodiments, the step of injecting formic acid may include manually injecting the formic acid into the cathode compartment of the electrolyzer stack via the injection port. In some embodiments, the method may further comprise directing the formic acid toward the cathode compartment of the electrolyzer stack via a pump.

### BRIEF DESCRIPTION OF THE DRAWINGS

FIG. 1A is perspective view of an electrolyzer cell stack according to the present disclosure;
FIG. 1B is a schematic view of an electrolysis system configured to utilize the electrolyzer cell stack of FIG. 1A;
FIG. 1C is a schematic view of an additional portion of the electrolysis system of FIG. 1B;
FIG. 2 is a schematic view of a simplified electrolysis system including a carbon filter and deionizers;
FIG. 3 is a schematic view of an electrolysis system including a contaminant mitigation system configured to remove ions from an electrolyzer stack;
FIG. 4 is an enlarged view of a portion of the electrolysis system of FIG. 3;
FIG. 5 is a schematic view of the electrolysis system of FIG. 3 including a different contaminant mitigation system configured to remove ions from the electrolyzer stack; and
FIG. 6 is a schematic view of the electrolysis system of FIG. 3 including a different contaminant mitigation system configured to remove ions from the electrolyzer stack.

### DETAILED DESCRIPTION

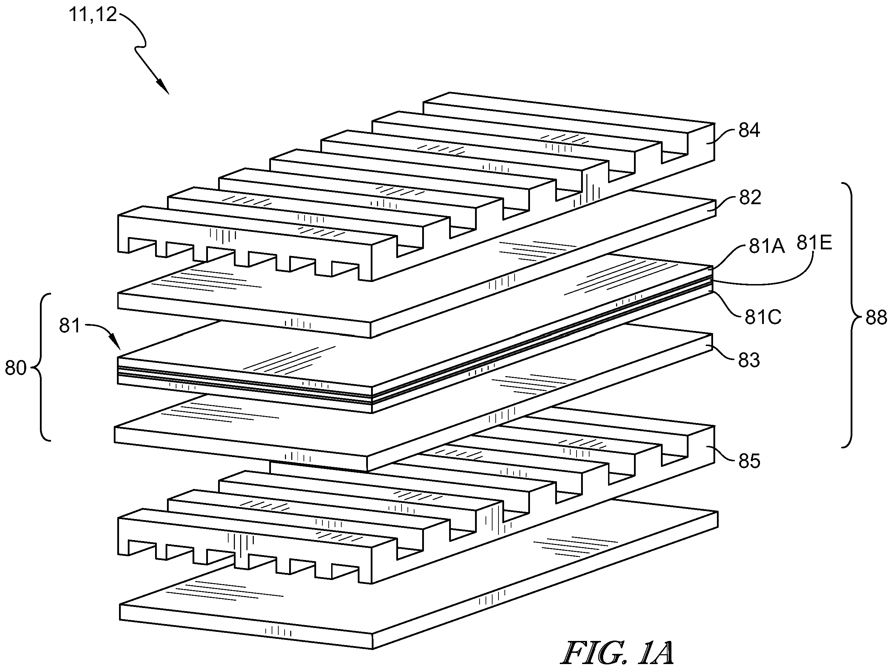

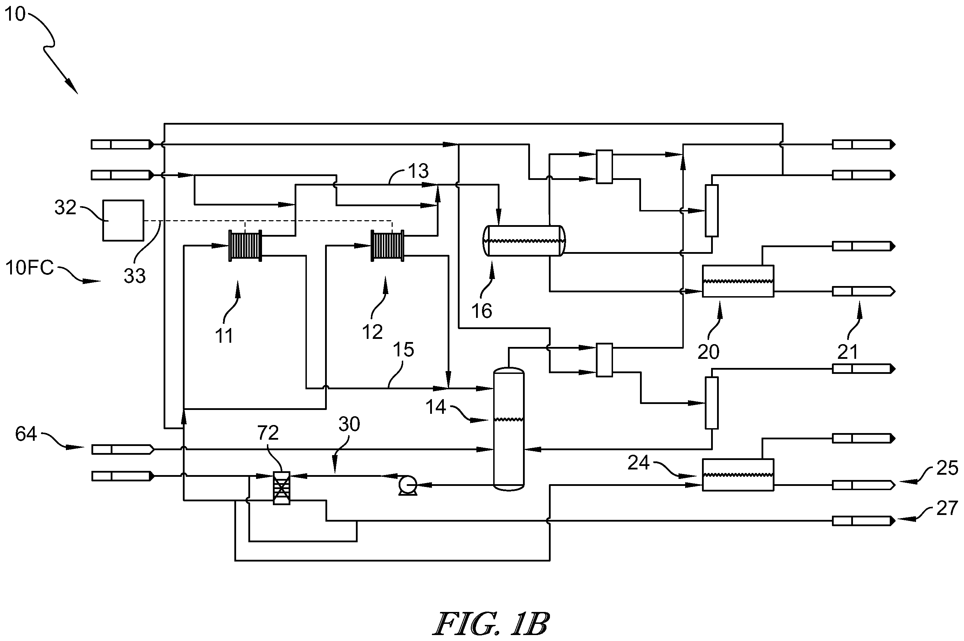

As shown in FIGS. 1A and 1B, electrolysis systems 10 are typically configured to utilize water and electricity to produce hydrogen and oxygen. An electrolysis system 10 typically includes one or more electrolyzer cells 80 that utilize electricity to chemically produce substantially pure hydrogen 13 and oxygen 15 from deionized water 30. Often the electrical source for the electrolysis systems 10 is produced from power or energy generation systems, including renewable energy systems such as wind, solar, hydroelectric, and geothermal sources for the production of green hydrogen. In turn, the pure hydrogen produced by the electrolysis systems 10 is often utilized as a fuel or energy source for those same power generation systems, such as fuel cell systems. Alternatively, the pure hydrogen produced by the electrolysis systems 10 may be stored for later use.

The typical electrolyzer cell 80, or electrolytic cell, is comprised of multiple assemblies compressed and bound into a single assembly, and multiple electrolyzer cells 80 may be stacked relative to each other, along with bipolar plates (BPP) 84, 85 therebetween, to form an electrolyzer cell stack (for example, electrolyzer cell stacks 11, 12 in FIG. 1B). Each electrolyzer cell stack 11, 12 may house a plurality of electrolyzer cells 80 connected together in series and/or in parallel. The number of electrolyzer cell stacks 11, 12 in the electrolysis systems 10 can vary depending on the amount of power required to meet the power need of any load (e.g., fuel cell stack). The number of electrolyzer cells 80 in an electrolyzer cell stack 11, 12 can vary depending on the amount of power required to operate the electrolysis systems 10 including the electrolyzer cell stack 11, 12.

An electrolyzer cell 80 includes a multi-component membrane electrode assembly (MEA) 81 that has an electrolyte 81E, an anode 81A, and a cathode 81C. Typically, the anode 81A, cathode 81C, and electrolyte 81E of the membrane electrode assembly (MEA) 81 are configured in a multi-layer arrangement that enables the electrochemical reaction to produce hydrogen and/or oxygen via contact of the water with one or more gas diffusion layers 82, 83. The gas diffusion layers (GDL) 82, 83, which may also be referred to as porous transport layers (PTL), are typically located on one or both sides of the MEA 81. Bipolar plates (BPP) 84, 85 often reside on either side of the GDLs and separate the individual electrolyzer cells 80 of the electrolyzer cell stack 11, 12 from one another. One bipolar plate 85 and the adjacent gas diffusion layers 82, 83 and MEA 81 can form a repeating unit 88.

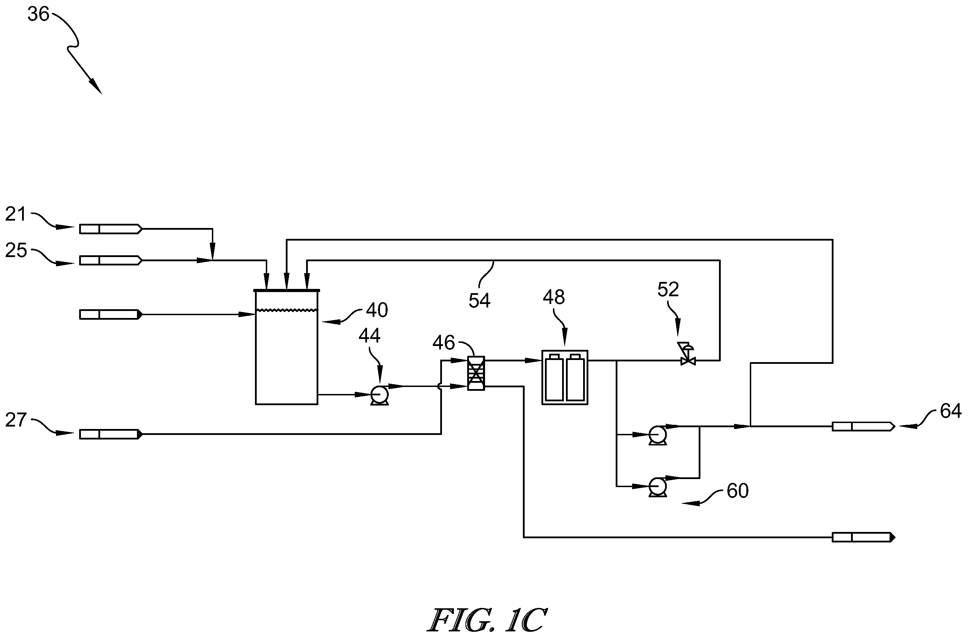

As shown in FIGS. 1B and 1C, an exemplary electrolysis system 10 can include two electrolyzer cell stacks 11, 12 and a fluidic circuit 10FC including the various fluidic pathways shown in FIGS. 1B and 1C that is configured to circulate, inject, and purge fluid and other components to and from the electrolysis systems 10. A person skilled in the art would understand that one or a variety of a number of components within the fluidic circuit 10FC, as well as more or less than two electrolyzer cell stacks 11, 12, may be utilized in the electrolysis systems 10. For example, the electrolysis systems 10 may include one electrolyzer cell stack 11, and in other examples, the electrolysis systems 10 may include three or more electrolyzer cell stacks.

The electrolysis systems 10 may include one or more types of electrolyzer cell stacks 11, 12 therein. In the illustrated embodiment, a polymer electrolyte membrane (PEM) electrolyzer cell 80 may be utilized in the stacks 11, 12. A PEM electrolyzer cell 80 typically operates at about 4°C to about 150°C, including any specific or range of temperatures comprised therein. A PEM electrolyzer cell 80 also typically functions at about 100 bar or less, but can go up to about 1000 bar (including any specific or range of pressures comprised therein), which reduces the total energy demand of the system. A standard electrochemical reaction that occurs in a PEM electrolyzer cell 80 to produce hydrogen is as follows.
- Anode: 2H₂O → O₂ + 4H⁺ + 4e⁻
- Cathode: 4H⁺ + 4e⁻ → 2H₂
- Overall: 2H₂O (liquid) → 2H₂ + O₂

Additionally, a solid oxide electrolyzer cell 80 may be utilized in the electrolysis systems 10. A solid oxide electrolyzer cell 80 will function at about 500°C to about 1000°C, including any specific or range of temperatures comprised therein. A standard electrochemical reaction that occurs in a solid oxide electrolyzer cell 80 to produce hydrogen is as follows.
- Anode: 2O²⁻ → O₂ + 4e⁻
- Cathode: 2H₂O + 4e⁻ → 2H₂ + 2O²⁻
- Overall: 2H₂O (liquid/vapor) → 2H₂ + O₂

Moreover, an AEM electrolyzer cell 80 may be utilized, which uses an alkaline media. An exemplary AEM electrolyzer cell 80 is an alkaline electrolyzer cell 80. Alkaline electrolyzer cells 80 comprise aqueous solutions, such as potassium hydroxide (KOH) and/or sodium hydroxide (NaOH), as the electrolyte. Alkaline electrolyzer cells 80 typically perform at operating temperatures ranging from about 0°C to about 150°C, including any specific or range of temperatures comprised therein. Alkaline electrolyzer cell 80 generally operates at pressures ranging from about 1 bar to about 100 bar, including any specific or range of pressures comprised therein. A typical hydrogen-generating electrochemical reaction that occurs in an alkaline electrolyzer cell 80 is as follows.
- Anode: 4OH⁻ → O₂ + 2H₂O + 4e⁻
- Cathode: 4H₂O + 4e⁻ → 2H₂ + 4OH⁻
- Overall: 2H₂O → 2H₂ + O₂

As shown in FIG. 1B, the electrolyzer cell stacks 11, 12 include one or more electrolyzer cells 80 that utilize electricity to chemically produce substantially pure hydrogen and oxygen from water. In turn, the pure hydrogen produced by the electrolyzer may be utilized as a fuel or energy source. As shown in FIG. 1B, the electrolyzer cell stack 11, 12 outputs the produced hydrogen along a fluidic connecting line 13 to a hydrogen separator 16, and also outputs the produced oxygen along a fluidic connecting line 15 to an oxygen separator 14.

The hydrogen separator 16 may be configured to output pure hydrogen gas and also send additional output fluid to a hydrogen drain tank 20, which then outputs fluid to a deionized water drain 21. The oxygen separator 14 may output fluid to an oxygen drain tank 24, which in turn outputs fluid to a deionized water drain 25. A person skilled in the art would understand that certain inputs and outputs of fluid may be pure water or other fluids such as coolant or byproducts of the chemical reactions of the electrolyzer cell stacks 11, 12. For example, oxygen and hydrogen may flow away from the cell stacks 11, 12 to the respective separators 14, 16. The system 10 may further include a rectifier 32 configured to convert electricity 33 flowing to the cell stacks 11, 12 from alternating current (AC) to direct current (DC).

The deionized water drains 21, 25 each output to a deionized water tank 40, which is part of a polishing loop 36 of the fluidic circuit 10FC, as shown in FIG. 1C. Water with ion content can damage electrolyzer cell stacks 11, 12 when the ionized water interacts with internal components of the electrolyzer cell stacks 11, 12. The polishing loop 36, shown in greater detail in FIG. 1C, is configured to deionize the water such that it may be utilized in the cell stacks 11, 12 and not damage the cell stacks 11, 12.

In the illustrated embodiment, the deionized water tank 40 outputs fluid, in particular water, to a deionized water polishing pump 44. The deionized water polishing pump 44 in turn outputs the water to a water polishing heat exchanger 46 for polishing and treatment. The water then flows to a deionized water resin tank 48.

Coolant is directed through the electrolysis systems 10, in particular through a deionized water heat exchanger 72 that is fluidically connected to the oxygen separator 14. The coolant used to cool said water may also be subsequently fed to the water polishing heat exchanger 46 via a coolant input 27 for polishing. The coolant is then output back to the deionized water heat exchanger 72 for cooling the water therein.

After the water is output from the deionized water polishing heat exchanger 46 and subsequently to the deionized water resin tank 48, a portion of the water may be fed to deionized water high pressure feed pumps 60. Another portion of the water may be fed to a deionized water pressure control valve 52, as shown in FIG. 1C. The portion of the water that is fed to the deionized water pressure control valve 52 flows through a recirculation fluidic connection 54 that allows the water to flow back to the deionized water tank 40 for continued polishing.

In some embodiments, the electrolysis systems 10 may increase deionized water skid for polishing water flow to flush out ions within the water at a faster rate. The portion of the water that is fed to the deionized water high pressure feed pumps 60 is then output to a deionized water feed 64, which then flows into the oxygen separator 14 for recirculation and eventual reusage in the electrolyzer cell stacks 11, 12. This process may then continuously repeat.

The electrolysis systems 10 described herein, may be used in stationary and/or immovable power systems, such as industrial applications and power generation plants. The electrolysis systems 10 may also be implemented in conjunction with other electrolysis systems 10.

The present electrolysis systems 10 may be comprised in mobile applications. The electrolysis systems 10 may be in a vehicle or a powertrain. The vehicle or powertrain comprising the electrolysis systems 10 may be an automobile, a pass car, a bus, a truck, a train, a locomotive, an aircraft, a light duty vehicle, a medium duty vehicle, or a heavy-duty vehicle.

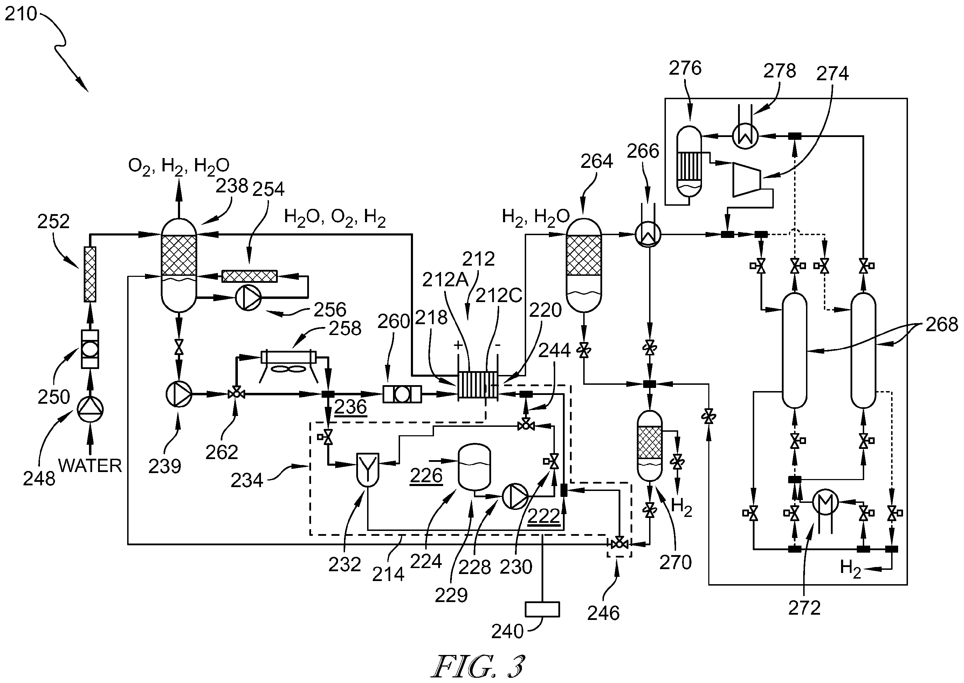

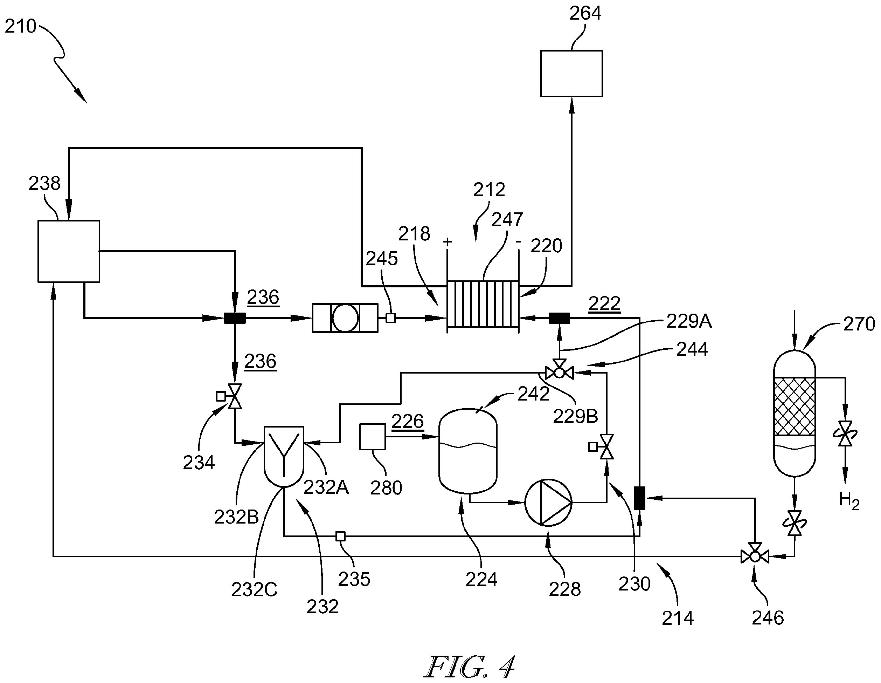

The present disclosure provides a contamination mitigation system 214 for use in an electrolysis system 210, as shown in FIGS. 3 and 4. The electrolysis system 210 includes an electrolyzer stack 212 and the contamination mitigation system 214. The electrolyzer stack 212 includes an inlet 218 and an injection port 220 opposite the inlet 218. The electrolyzer stack 212 may be the electrolyzer cell stack 11, 12 described above.

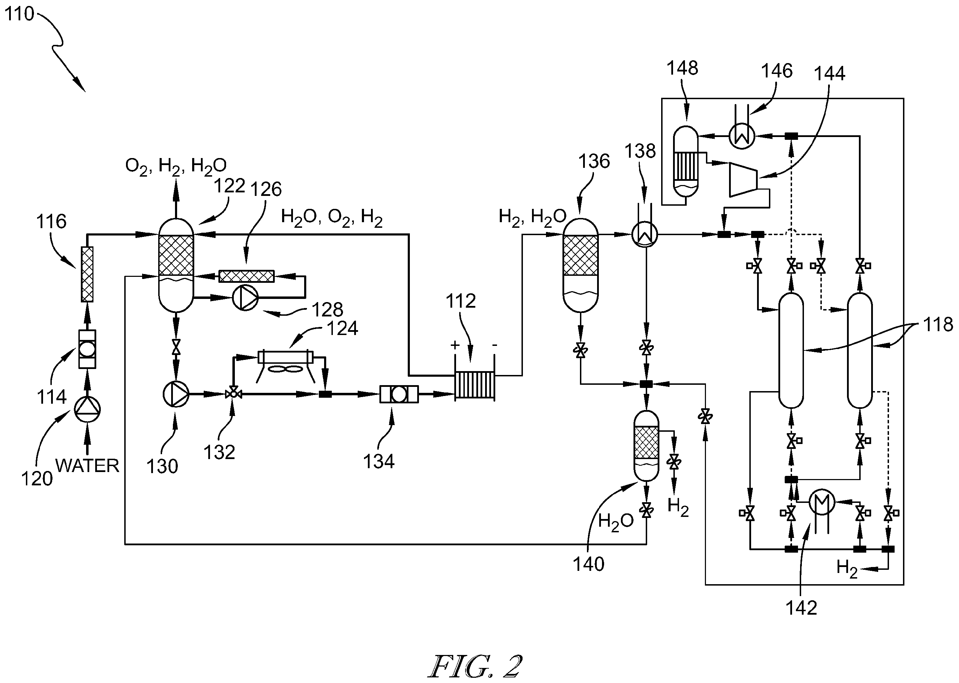

Impurities and/or contaminants may be detrimental to the operation of electrolysis systems, such as the electrolysis system 210. In some electrolysis systems 110, impurities and/or contaminants may be removed with a passive filter 114, such as a carbon filter, or with a deionizer 116, as shown in FIG. 2. However, such means may be insufficient to guarantee electrolyzer operation over an extended period of time without multiple maintenance cycles (i.e., filter replacements) or reducing hydrogen and oxygen costs (i.e., via less stringent water purity specifications as system materials in contact with water may release unwanted species).

Contaminants may include any one of or any combination of ions, organic species, inorganic species, particulates, and biological agents. Ions may include any one of or any combination of titanium from bipolar plates and/or porous transport layers, iron, chromium, nickel from steel, and copper, among others. Biological agents may include bacteria, molds, yeasts, etc.

In particular, ions affect performance losses (kinetic, ohmic, and/or mass transfer) of the electrolysis system 110 and may impact product purity and electrolyzer degradation. For example, ions may accumulate in a membrane of an electrolyzer cell over time, and the ions may negatively impact the membrane. Ions may reduce the amount of water in the membrane, which increases a resistance of the membrane. Ions may also impede the transport of oxygen (O₂) and/or hydrogen (H₂) due to the reduction of water in the membrane. Some ions may accelerate the conversion or decomposition of hydrogen peroxide (H₂O₂) to radicals. For example, Ti³⁺ or Ti⁴⁺ may catalyze the decomposition of H₂O₂ formed at catalyst layers by crossover of O₂ and H₂ through the membrane to radicals, which attack the membrane. These radicals, thus, can degrade the membrane.

Some electrolysis systems 110, as shown in FIG. 2, include the carbon filter 114, the deionizer 116, and a temperature swing adsorption (TSA) dryer 118. Filters 114 and deionizers 116 may not be robust enough to capture all ions. Specifically, these components may be insufficient to mitigate contaminants either by dissolution of leftover species during electrolyzer construction or because of material degradation, such as corrosion. Also, contaminant accumulation may occur if filters 114 and deionizers 116 reach their storage capacity because maintenance cycles were missed. Further, the filter 114 and the deionizer 116 work to remove ions from water passing through the electrolysis system 110. However, the filter 114 and the deionizer 116 do not remove the ions that accumulate in the membrane and catalyst layers' ionomer of the electrolyzer cell.

Some electrolysis systems 110 include a water pump 120, the carbon filter 114 and the deionizer 116 for treatment of the water, a water tank 122 (i.e., a demister/water tank), and a radiator 124, as shown in FIG. 2. An additional deionizer 126 and a deionized water pump 128 are connected to the water tank 122 to remove system-generated impurities that accumulate in the water tank 122. A recirculation water pump 130 is coupled to the water tank 122 to direct deionized water to the radiator 124 and/or to a filter 134, and ultimately to the electrolyzer stack 112. The radiator 124 may be bypassed via a bypass valve 132, for example, during start up and low stack power operation. Anode-side effluent water and cathode-side condensate are recycled to the water tank 122 from the electrolyzer stack 112.

Some electrolysis systems 110 also include a high pressure water separator (HPWS) 136 that receives the hydrogen/water cathode effluent stream from the electrolyzer stack 112, as shown in FIG. 2. The hydrogen/water cathode effluent stream flows to the HPWS 136 to recover liquid water, is cooled in a chiller 138 to condense water vapor, and is fed to the TSA dryer 118 for final drying to produce a hydrogen product. Water recovered in the HPWS 136 and the chiller 138 is delivered to a low pressure hydrogen separator (LPHS) 140 to remove the dissolved hydrogen therefrom, which may be periodically vented to a discharge chamber or to atmosphere, and the water may be returned to the water tank 122. The chiller 138 may cool the hydrogen/water cathode effluent stream to about 30°C.

To minimize hydrogen loss, the TSA dryer 118 may include at least two adsorption beds, one for drying and one for regenerating. Regeneration may be accomplished by heating the bed to desorb water by feeding a hot, dry hydrogen stream heated by an electric heater 142 followed by cooling the bed using the hydrogen product at low temperature. The regeneration loop may use a blower 144, the electric heater 142, a chiller 146 to cool the hot and wet hydrogen, and a demister 148 to remove the condensate water after chilling. The chiller 146 may cool the hydrogen product to about 30°C. The electric heater 142 may heat the hydrogen stream to about 220°C.

The contamination mitigation system 214 is integrated with the electrolysis system 210, as shown in FIG. 3. The contamination mitigation system 214 maintains the performance of the electrolysis system 210 by effectively managing and removing foreign cations from the electrolysis system 210, thus preventing degradation of the membrane and catalyst layers' ionomer and ensuring efficient operation over time. The contamination mitigation system 214 includes additional means to remove foreign cations during electrolysis system 210 operation than that provided by the electrolysis system 110.

During electrolysis system 210 operation, foreign cations accumulate at the cathode of the electrolyzer cells included in the electrolyzer stack 212 due to an electric field. The contamination mitigation system 214 facilitates the removal of the foreign cations with formic acid (HCOOH) 226 injected into a cathode compartment 212C of the electrolyzer stack 212 via the injection port 220, as shown in FIG. 3. The formic acid 226 helps to remove the ions that accumulate in the membrane and catalyst layers' ionomer of the electrolyzer cell.

The contamination mitigation system 214 includes a formic acid storage tank 224 having the formic acid 226 therein, as shown in FIG. 3. The contamination mitigation system 214 further includes a pump 228, an injection line 229, a first valve 230, a mixer 232, a second valve 234, and/or a bypass valve 244. The pump 228 pumps and/or directs the formic acid 226 toward the mixer 232 and/or the electrolyzer stack 212 from the storage tank 224 through the injection line 229. The pump 228 is located along the injection line 229 between the storage tank 224 and the first valve 230.

The first valve 230 is located on the injection line 229 downstream of the pump 228, as shown in FIG. 3. The first valve 230 can selectively open, partially open, and close to allow the formic acid 226 to be directed toward the mixer 232 and/or the electrolyzer stack 212 from the storage tank 224. The first valve 230 can control an amount of the formic acid 226 being directed toward the mixer 232 and/or the electrolyzer stack 212.

The bypass valve 244 is illustratively a three-way valve, as shown in FIG. 3. The bypass valve 244 is located on the injection line 229 and defines a first branched injection line 229A and a second branched injection line 229B, as shown in FIG. 4. The first branched injection line 229A extends from the bypass valve 244 directly to the injection port 220. The second branched injection line 229B extends from the bypass valve 244, to the mixer 232, and then to the injection port 220.

The bypass valve 244 directs the formic acid 226 directly to the injection port 220 of the electrolyzer stack 212 via the first branched injection line 229A and/or to a first inlet 232A of the mixer 232 via the second branched injection line 229B, as shown in FIG. 4. The bypass valve 244 is located downstream of the first valve 230 and upstream of the mixer 232 and the electrolyzer stack 212. The bypass valve 244 may move between a closed position, a first open position, a second open position, and a third open position. The bypass valve 244 may be in the closed position such that the formic acid 226 is not directed to the mixer 232 or the electrolyzer stack 212, a first open position such that the formic acid 226 is directed only to the mixer 232, a second open position such that the formic acid 226 is directed only to the electrolyzer stack 212, or a third open position such that the formic acid 226 is directed to the mixer 232 and the electrolyzer stack 212.

Water permeates from an anode compartment 212A to the cathode compartment 212C during electrolyzer stack 212 operation. This water transfer may increase due to osmosis enabled by the presence of the formic acid 226 in the cathode compartment 212C. Therefore, water may already be present in the cathode compartment 212C to dilute the formic acid 226 in the cathode compartment 212C (instead of in the mixer 232, as described below). Thus, the formic acid 226 may not always need to be diluted in the mixer 232 (as described below) before being directed to the electrolyzer stack 212. The bypass valve 244 is configured to tune the formic acid 226 injection into the electrolyzer stack 212 thereby allowing for partial or complete bypass of the mixer 232 for dilution of the formic acid 226.

The mixer 232 receives the formic acid 226 from the storage tank 224 and water 236 from a water tank 238, as shown in FIG. 3. The formic acid 226 is received by the first inlet 232A, and the water 236 is received by a second inlet 232B of the mixer 232, as shown in FIG. 4. A recirculation pump 239 directs the water 236 from the water tank 238 to the second inlet 232B of the mixer 232. The second valve 234 can selectively open, partially open, and close to allow the water 236 to be directed toward the mixer 232. The second valve 234 can control an amount of water 236 being directed toward and into the mixer 232.

In the mixer 232, the water 236 and the formic acid 226 mix with one another to form a formic acid solution 222, as shown in FIG. 3. The water 236 dilutes the concentration of the formic acid 226. The amount of water 236 and the amount of formic acid 226 being directed to the mixer 232 can be varied to adjust the concentration of the formic acid solution 222. The formic acid solution 222 is then directed from an outlet 232C of the mixer 232 and into the cathode compartment 212C of the electrolyzer stack 212 via the injection port 220, as shown in FIG. 4. The formic acid solution 222 or the formic acid 226 may be directed into the cathode compartment 212C while the electrolyzer stack 212 is operating.

As shown in FIG. 3, the electrolysis system 210 includes a water pump 248, a carbon filter 250, a first deionizer 252, the water tank 238, a second deionizer 254, a deionized water pump 256, the recirculation pump 239, a radiator 258, and/or a microparticle filter 260. The water pump 248 directs water through the carbon filter 250 and the first deionizer 252 for treatment and filtration of the water. The water is then directed into the water tank 238. The water tank 238 may include a demister that separates vapor from the water. The water in the water tank 238 may be pumped out of the water tank 238, through the deionized water pump 256, through the second deionizer 254, and back into the water tank 238, as shown in FIG. 3. The second deionizer 254 may remove impurities that accumulate in the water tank 238. The water 236 in the water tank 238 may be directed, via the recirculation pump 239, toward the inlet 218 of the electrolyzer stack 212. The water 236 is used to produce hydrogen and oxygen.

From the recirculation pump 239, the water 236 may flow through the radiator 258, through the microparticle filter 260, and into the inlet 218 of the electrolyzer stack 212 or may bypass the radiator 258 to flow through the microparticle filter 260 and into the inlet 218 of the electrolyzer stack 212, as shown in FIG. 3. A bypass valve 262 is located between the recirculation pump 239 and the radiator 258/the microparticle filter 260 to allow the water 236 to bypass the radiator 258. Anode-side effluent water and cathode-side condensate are recycled to the water tank 238 from the electrolyzer stack 212, as shown in FIG. 3.

The second valve 234 is located downstream of the bypass valve 262, as shown in FIG. 3. The water 236 from the water tank 238 flows through the recirculation pump 239, through the bypass valve 262, through the second valve 234, and into the mixer 232.

In some embodiments, the electrolysis system 210 further includes a high pressure water separator (HPWS) 264, a first chiller 266, a temperature swing adsorption (TSA) dryer 268, a low pressure hydrogen separator (LPHS) 270, an electric heater 272, a blower 274, a demister 276, and/or a second chiller 278, as shown in FIG. 3. The hydrogen/water cathode effluent stream, leftover formic acid solution 222, and/or leftover formic acid 226 from the electrolyzer stack 212 is/are directed into the HPWS 264 to recover water, cooled in the first chiller 266 to condense water vapor, and fed to the TSA dryer 268 for final drying to produce a hydrogen product. The first chiller 266 may cool the hydrogen/water cathode effluent stream to about 30°C. Water, leftover formic acid solution 222, and/or leftover formic acid 226 recovered in the HPWS 264 and the first chiller 266 is/are delivered to the LPHS 270 to remove the dissolved hydrogen therefrom, which may be periodically vented to a discharge chamber or to atmosphere. The recovered water, leftover formic acid solution 222, and/or leftover formic acid 226 is/are returned to the water tank 238 and/or directed to the injection port 220 of the electrolyzer stack 212, as shown in FIG. 3.

Spent formic acid solution 222 and/or formic acid 226 contains cations that were exchanged from contaminated ionomers in the cathode compartment 212C, which eventually limits the extent of the ion exchange process. In the water tank 238, the second deionizer 254 can remove the undesirable cations from the formic acid solution 222 and/or formic acid 226.

In some embodiments, the contamination mitigation system 214 further includes a bypass valve 246, as shown in FIG. 3. The bypass valve 246 is located downstream of the LPHS 270 and upstream of the water tank 238 and the injection port 220 of the electrolyzer stack 212. The bypass valve 246 directs the recovered water, the formic acid solution 222, and/or formic acid 226 to the water tank 238, to the electrolyzer stack 212, or to both the water tank 238 and the electrolyzer stack 212. Exposure of the cathode compartment 212C to the formic acid 226 or the formic acid solution 222 achieves a more extensive ion exchange by directing the formic acid 226 or the formic acid solution 222 from the LPHS 270 back to the injection port 220, which is facilitated by the bypass valve 246. During that period, water will continue accumulating within the components of the recirculation loop. Therefore, the separators 264, 270 and the demister 276 need to have a sufficient volume to accommodate the increase in water inventory.

To minimize hydrogen loss, the TSA dryer 268 may include at least two adsorption beds, one for drying and one for regenerating. Regeneration may be accomplished by heating the bed to desorb water by feeding a hot, dry hydrogen stream heated by the electric heater 272 followed by cooling the bed using the hydrogen product at low temperature. The regeneration loop may use the blower 274 and the second chiller 278 to cool the hot and wet hydrogen, and the demister 276 to remove the condensate water after chilling. The second chiller 278 may cool the hydrogen product to about 30°C. The electric heater 272 may heat the hydrogen stream to about 220°C.

In some embodiments, filtration means 280, such as a filter 280, are included in the contamination mitigation system 214 upstream or downstream of the storage tank 224 for filtration of the formic acid 226, as shown in FIG. 4. The filter 280 allows formic acid 226 that is less pure to be used in the contamination mitigation system 214 as the filter 280 removes and/or filters impurities from the formic acid 226. Thus, the filter 280 balances the cost of the formic acid 226 with its purity.

In some embodiments, the storage tank 224 includes a relief valve 242, as shown in FIG. 4. Concentrated formic acid 226 may slowly decompose to carbon monoxide and water (see Equation 9 below) within the storage tank 224. This decomposition may lead to a pressure buildup in the storage tank 224. The relief valve 242 allows for pressure to be released from the storage tank 224.

Formic acid 226 has a boiling point of about 100.8 °C and, therefore, the formic acid vapor pressure is relatively high in the electrolysis system 210. A suitable adsorbent for formic acid 226 may be added to the TSA dryer 268 to minimize losses, which avoids hydrogen contamination and increases the cation removal efficiency.

In some embodiments, the formic acid solution 222 and/or the formic acid 226 is/are injected into the cathode compartment 212C via the injection port 220 at predetermined intervals. In some embodiments, the predetermined interval is one month such that the formic acid solution 222 and/or the formic acid 226 is/are injected once per month. In some embodiments, the predetermined interval is two weeks such that the formic acid solution 222 and/or the formic acid 226 is/are injected once every two weeks. In some embodiments, the predetermined interval is greater than one month. The predetermined interval ranges from about one week to about one year, including any range or specific interval comprised therein. In some embodiments, a control system 240 determines when and how often to inject the formic acid solution 222 and/or the formic acid 226 into the cathode compartment 212C.

In some embodiments, the formic acid solution 222 and/or the formic acid 226 is/are injected into the cathode compartment 212C via the injection port 220 in response to an increase in cell voltage, an increase in water conductivity, an increase in high frequency resistance, and/or a change in another monitored parameter. For example, the control system 240 may determine that foreign cations are accumulating in the cathode compartment 212C. In response to the determination that foreign cations are accumulating in the cathode compartment 212C (for example, the accumulation being equal to or greater than a threshold), the control system 240 may operate the contamination mitigation system 214 to inject the formic acid solution 222 and/or the formic acid 226.

The control system 240 is operably connected to the contamination mitigation system 214 to control the contamination mitigation system 214, as shown in FIG. 3. The control system 240 monitors parameters of the electrolysis system 210 to avoid undesirable events while using the formic acid solution 222 and/or the formic acid 226 as the introduction of the formic acid solution 222 and/or the formic acid 226 will increase water conductivity. The water conductivity is monitored by a sensor 245 included in the contamination mitigation system 214, as shown in FIG. 4. The sensor 245 is in communication with the control system 240 to communicate water conductivity data to the control system 240. The sensor 245 detects, measures, or determines water conductivity data regarding the water 236 that is directed into the electrolyzer stack 212, as shown in FIG. 4.

The control system 240 is in communication with the valves 230, 234, 244, 246 of the contamination mitigation system 214, as shown in FIG. 4. The control system 240 directs the valves 230, 234, 244, 246 to open, partially open, close, or to assume one of the positions of the three-way valves 244, 246. The control system 240 is also in communication with the pump 228 to control operation of the pump 228. The control system 240 receives water conductivity data from the sensor 245, and based, at least in part, on the water conductivity data, the control system 240 operates the valves 230, 244, 246 to increase or decrease an amount of the formic acid 226 being directed to the electrolyzer stack 212 or the mixer 232. The control system 240 also operates the second valve 234 to increase or decrease an amount of the water 236 being directed to the mixer 232 based, at least in part, on the water conductivity data. In this way, the control system 240 adjusts the concentration of the formic acid solution 222 based, at least in part, on the water conductivity data.

The control system 240 is also in communication with the electrolyzer stack 212 to monitor any increase in high frequency resistance and cell voltage. The control system 240 receives resistance data and voltage data from a sensor 247, as shown in FIG. 4, and based, at least in part, on the resistance data and/or voltage data, the control system 240 operates the valves 230, 244, 246 to increase or decrease an amount of the formic acid 226 being directed to the electrolyzer stack 212 or the mixer 232. The control system 240 also operates the second valve 234 to increase or decrease an amount of the water 236 being directed to the mixer 232 based, at least in part, on the resistance data and/or voltage data. In this way, the control system 240 adjusts the concentration of the formic acid solution 222 based, at least in part, on the resistance data and/or voltage data.

The control system 240 is also in communication with the mixer 232 and/or a sensor 235, as shown in FIG. 4, to monitor the concentration of the formic acid solution 222 being output by the mixer 232. Based on the inputs to the control system 240 (i.e., the water conductivity data, the resistance data, the voltage data, and the concentration data), the control system 240 operates the valves 230, 234, 244, 246 and the pump 228.

The formic acid solution 222 and/or the formic acid 226 is/are injected into the cathode compartment 212C via the injection port 220, as shown in FIG. 4. The concentration of the formic acid solution 222 and/or the formic acid 226 should be greater than a concentration of ions in water. The necessary concentration of the formic acid solution 222 and/or the formic acid 226 varies based on the properties of the water (i.e., how impure the water is). The proton formed during formic acid dissolution (Equation 1) will subsequently be exchanged with the foreign cations associated with sulfonate sites in the catalyst layers' ionomer and membrane (Equation 2), which are subsequently captured by deionizing filter ion exchange resins.

HCOOH ↔ H⁺ + HCOO⁻ (Equation 1)

mH⁺ + (SO₃⁻)ₘX^{m+} ↔ m(SO₃⁻)H⁺ + X^{m+} (Equation 2)

Formic acid solution 222 and/or formic acid 226 not subject to dissolution via Equation 1 may be electrochemically oxidized on platinum at the operating cathode potential (Equation 3). Equations 3-12 show other reactions that occur within the electrolysis system 210. As shown in Equation 3, protons can be produced via reactions other than those shown in Equation 1. Formic acid solution 222 may also be chemically oxidized on platinum (Equation 4) leading to H₂. The formic acid solution 222 is preferably introduced to the cathode compartment 212C to minimize safety issues related to the anode compartment 212A as H₂ is flammable when mixed with O₂ (thus, introducing the formic acid solution 222 into the anode compartment 212A raises flammability concerns, see Equation 4). As shown in Equations 5-7, carbon dioxide produced by the reactions shown in Equations 3 and 4 is another source of protons (H⁺).

HCOOH → CO₂ + 2H⁺ + 2e⁻ (E⁰=-0.25 V vs RHE) (Equation 3)

HCOOH → H₂ + CO₂ (Equation 4)

CO₂ + H₂O ↔ H₂CO₃ (Equation 5)

H₂CO₃ ↔ H⁺ + HCO₃⁻ (Equation 6)

HCO₃⁻ ↔ H⁺ + CO₃²⁻ (Equation 7)

The electrochemical oxidation of HCOOH (Equation 3) creates an adsorbed carbon monoxide intermediate that reduces the platinum catalyst surface area (Equation 8). The chemical decomposition of HCOOH also leads to carbon monoxide (Equation 9) that can subsequently adsorb on platinum (Equation 10).

HCOOH + Pt → Pt-CO_{ads} + H₂O (Equation 8)

HCOOH → CO + H₂O (Equation 9)

CO + Pt ↔ Pt-CO_{ads} (Equation 10)

The effect of carbon monoxide is chemically managed by oxygen transferred by diffusion through the membrane from the anode compartment 212A. This process is more effective than in proton exchange membrane fuel cells due to the significantly higher partial pressure of oxygen promoting diffusion through the membrane (from about 0.5 bar pressure in a fuel cell to about greater than 30 bar in an electrolyzer cell). Equations 11 and 12 use oxygen presence in the anode compartment 212A to mitigate the effect of carbon monoxide accumulation.

O₂ + 2Pt ↔ 2Pt-O_{ads} (Equation 11)

Pt-O_{ads} + Pt-CO_{ads} → 2Pt + CO₂ (Equation 12)

Other products of the reactions shown in Equations 1, 2, 4, 6, and 7 are either captured by deionizing filter ion exchange resins (HCOO⁻, X^{m+}, HCO₃⁻, CO₃²⁻) or contribute to the cathode main product (H₂). Carbonic acid will exit the system either by venting (reverse Equation 5) or by dissociation (Equations 6 and 7) followed by scavenging in deionizing filter ion exchange resins. Carbon monoxide and carbon dioxide (Equations 3, 4, 9, and 12) are more easily adsorbed than hydrogen and will be captured by the TSA dryer 268. In some embodiments, specific adsorbents for carbon monoxide and carbon dioxide may be included in the TSA dryer 268.

Formic acid 226 will decompose according to Equations 1, 3, 4, 8, and 9. The decomposition processes of formic acid 226 and its byproducts eliminate the need for a water rinse of the electrolyzer stack 212, which results in a simpler regeneration process. Thus, the electrolyzer stack 212 does not require a water rinse after use of the contamination mitigation system 214. Because the electrolyzer stack 212 does not require a water rinse, a duration of the process of using the contamination mitigation system 214 is decreased (as compared to processes requiring a rinse step).

The use of formic acid 226 has many advantages. Formic acid 226 is a natural product generated by plants, insects, and bacteria that is biodegradable. Formic acid 226 is a liquid that is stockpiled in bulk in concentrations exceeding 99 weight percent, which can significantly decrease the size of the storage tank 224. Additionally, formic acid 226 is completely miscible with water enabling a wide concentration range able to satisfy different requirements. Formic acid 226 will not significantly contribute to water conductivity as it is weak with a pKa of 3.75 (see Table 1), which is lower than for CH₃COOH (acetic acid), is like H₂CO₃ (carbonic acid), and is much higher than CF₃SO₃H (trifluoromethanesulfonic acid, a proxy to the catalyst layer ionomer and membrane). For example, a 2.9 mM solution of HCOOH yields a 0.63 mM H⁺ concentration (pH of 3.2) with a conductivity of 307 µS/cm. As the formic acid solution 222 is relatively dilute, the temporary efficiency loss attributed to shunt currents in electrolyzer stacks 212 is relatively small.

**Table 1. Acid dissociation constants.**

| **Acid** | **pKa₁** | **pKa₂** |
|---|---|---|
| CH₃COOH | 4.76 | - |
| HCOOH | 3.75 | - |
| H₂CO₃ | 3.6 | 10.3 |
| CF₃SO₃H | -14.7 | - |

| | | |
|---|---|---|
| HA↔A⁻+H⁺, Kₐ=[A⁻][H⁺]/[HA], pKₐ=-log(Kₐ). | | |

The concentration of the formic acid solution 222 can be varied to meet different requirements because the ion exchange process (Equation 2) time scale is dependent on the formic acid solution 222 concentration. In some embodiments, the concentration of the formic acid solution 222 ranges from about 0.01 to about 10 M, including any specific concentration or range of concentrations comprised therein. The current density can also be varied, although high values are preferred to concentrate the foreign ions near and within the cathode catalyst layer ionomer. Operation under an open circuit condition is also possible.

Thus, the contamination mitigation system 214 allows for the removal of foreign cations during electrolyzer stack 212 operation as described above in relation to Equations 1 to 12. During electrolyzer stack 212 operation, foreign cations accumulate at the cathode due to the electric field, which facilitate their removal with the formic acid 226 and/or the formic acid solution 222 injected in the cathode compartment 212C and near the catalyst ionomer assisting ion exchange (Equation 2). This feature is advantageous because shutdowns at customer sites should be avoided to maximize electrolyzer utilization.

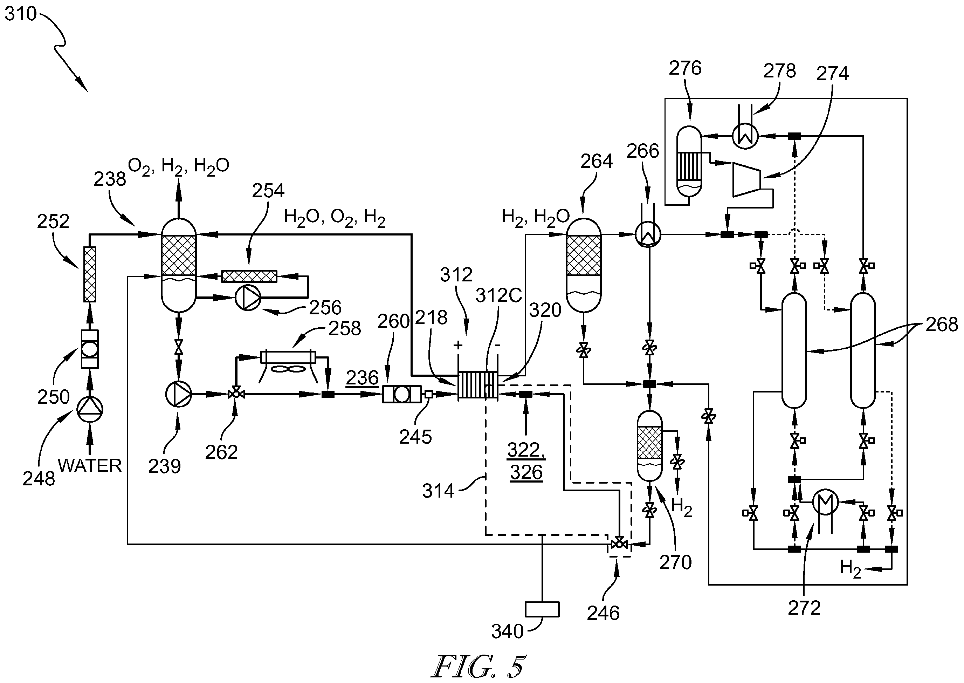

Another embodiment of a contamination mitigation system 314 for use in an electrolysis system 310 is shown in FIG. 5. The contamination mitigation system 314 and the electrolysis system 310 are substantially similar to the contamination mitigation system 214 and the electrolysis system 210 shown in FIGS. 3 and 4 and described herein. Accordingly, similar reference numbers in the 300 series indicate features that are common between the contamination mitigation system 314 and the electrolysis system 310 and the contamination mitigation system 214 and the electrolysis system 210, respectively. The description of the contamination mitigation system 214 and the electrolysis system 210 is incorporated by reference to apply to the contamination mitigation system 314 and the electrolysis system 310, except in instances of conflict with the specific disclosure of the contamination mitigation system 314 and the electrolysis system 310.

The contamination mitigation system 314 includes an injection port 320 formed in the electrolyzer stack 312, as shown in FIG. 5. The injection port 320 is used during maintenance procedures for injection of formic acid solution 322 or formic acid 326 into the cathode compartment 312C. In this way, the formic acid 326 may be diluted to form a formic acid solution 322 before injection into the injection port 320. The formic acid solution 322 or formic acid 326 may be manually injected by an operator or a technician. A control system 340 is in communication with the electrolyzer stack 312, the sensors 245, 247, and the contamination mitigation system 314, as shown in FIG. 5. The control system 340 may output instructions to the operator or the technician regarding the necessary amount or concentration of the formic acid solution 322 or the formic acid 326 for injection based on the water conductivity data, the voltage data, the resistance data, and/or data related to the prior injection. The control system 340 may store data therein regarding the time of the injection, the amount of the injection, and the concentration of the formic acid solution 322 or the formic acid 326 being injected. The contamination mitigation system 314 is advantageous to service the electrolyzer stack 312 without shutting the electrolyzer stack 312 down and requires a minimal number of additional system components.

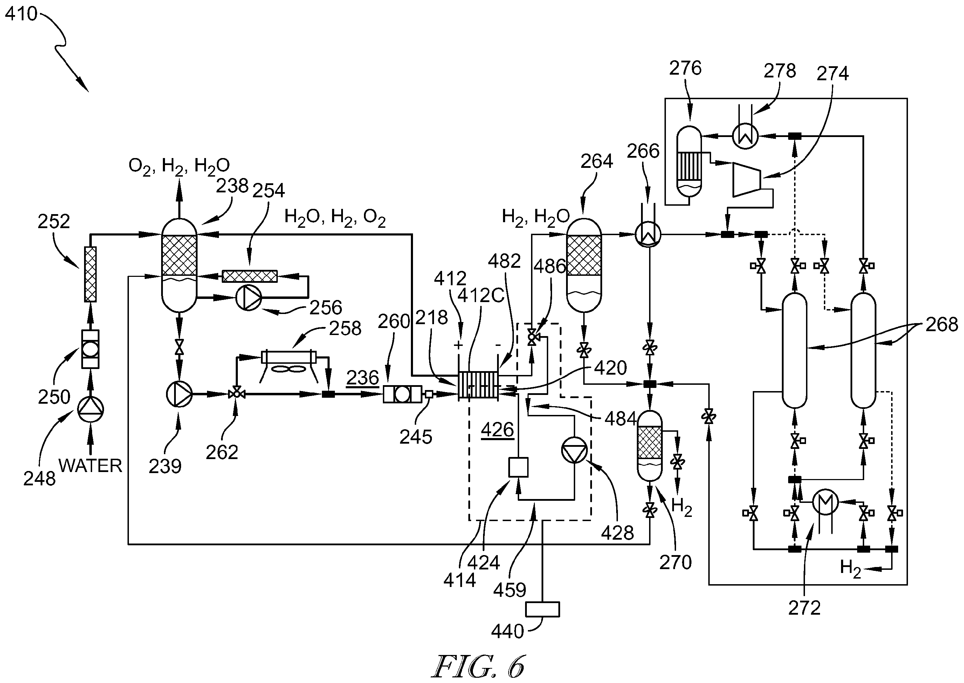

Another embodiment of a contamination mitigation system 414 for use in an electrolysis system 410 is shown in FIG. 6. The contamination mitigation system 414 and the electrolysis system 410 are substantially similar to the contamination mitigation system 214, 314 and the electrolysis system 210, 310 shown in FIGS. 3-5 and described herein. Accordingly, similar reference numbers in the 400 series indicate features that are common between the contamination mitigation system 414 and the electrolysis system 410 and the contamination mitigation system 214, 314 and the electrolysis system 210, 310, respectively. The description of the contamination mitigation system 214, 314 and the electrolysis system 210, 310 is incorporated by reference to apply to the contamination mitigation system 414 and the electrolysis system 410, except in instances of conflict with the specific disclosure of the contamination mitigation system 414 and the electrolysis system 410.

The contamination mitigation system 414 includes an injection port 420 and an outlet port 482 formed in the electrolyzer stack 412, as shown in FIG. 6. The injection port 420 is used for injection of formic acid 226 into the cathode compartment 412C. Excess formic acid 426 may be removed from the cathode compartment 412C via the outlet port 482.

The contamination mitigation system 414 includes a three-way valve 486 downstream of the outlet port 482, as shown in FIG. 6. The three-way valve 486 is configured to direct the formic acid 426 from the outlet port 482, through the three-way valve 486, and to an exhaust 484 while the three-way valve 486 is in a first position. The three-way valve 486 is located upstream of the exhaust 484 and upstream of the HPWS 264. While the three-way valve 486 is in the first position, the formic acid 426 is blocked from flowing to the HPWS 264. Instead, the formic acid 426 is directed to the exhaust 484. The three-way valve 486 is also configured to direct the formic acid 426 from the outlet port 482, through the three-way valve 486, and to the HPWS 264 while the three-way valve 486 is in a second position.

The contamination mitigation system 414 further includes a formic acid storage tank 424 fluidly coupled to the injection port 420 and a pump 428 located between the storage tank 424 and the exhaust 484, as shown in FIG. 6. The contamination mitigation system 414 minimizes the exposure of components of the electrolysis system 410 to the formic acid 426 during electrolyzer shutdown periods. The three-way valve 486 facilitates recirculation of the formic acid 426 through the storage tank 424 and the pump 428. A recirculation line 459 is formed between and defined by the outlet port 482, the three-way valve 486, the pump 428, and the storage tank 424. A control system 440 is in communication with the electrolyzer stack 412, the sensors 245, 247, and the contamination mitigation system 414, as shown in FIG. 6.

Liquids other than formic acid 226, 326, 426 may be used in the contamination mitigation system 214, 314, 414, such as, for example, hydrogen peroxide, hydrochloric acid, sulfuric acid, nitric acid, or carbon dioxide. Hydrogen peroxide may not be preferred because it catalyzes ionomer and membrane degradation. Hydrochloric acid may not be preferred as chloride contamination can lead to chlorine evolution potentially reducing oxygen and hydrogen product purity. Sulfuric acid may not be preferred due to the risk of sulfur deposition on the cathode platinum catalyst blocking active sites. Nitric acid may not be preferred as nitrate is reduced to cations at the cathode potential, which may interfere with the cleaning process. Carbon dioxide may not be preferred because high pressure carbon dioxide storage is bulky.

The following described aspects of the present invention are contemplated and nonlimiting:

A first aspect of the present invention relates to an electrolysis system. The electrolysis system comprises an electrolyzer stack and a contamination mitigation system. The electrolyzer stack includes an injection port fluidly connected with a cathode compartment of the electrolyzer stack. The contamination mitigation system is configured to remove ions from the electrolyzer stack to mitigate ion contamination in the electrolyzer stack. The contamination mitigation system includes a storage tank including formic acid therein, an injection line fluidly coupled between the storage tank and the injection port, and a pump coupled to the injection line and configured to direct the formic acid to the injection port from the storage tank for injection into the cathode compartment of the electrolyzer stack.

A second aspect of the present invention relates to a method. The method comprises providing an electrolyzer stack including an injection port fluidly connected with a cathode compartment of the electrolyzer stack, injecting formic acid into the cathode compartment of the electrolyzer stack via the injection port, and removing ions from the electrolyzer stack via the formic acid to mitigate ion contamination in the electrolyzer stack.

In the first aspect of the present invention, the contamination mitigation system may further include a mixer located downstream of the storage tank and configured to receive the formic acid from the storage tank and water from a water tank included in the electrolysis system to dilute the formic acid in the mixer and create a formic acid solution. In the first aspect of the present invention, the contamination mitigation system may further include a bypass valve located between the storage tank and the mixer. In the first aspect of the present invention, the injection line may include a first branched injection line configured to direct the formic acid from the storage tank, through the bypass valve, and directly to the injection port without passing through the mixer and a second branched injection line configured to direct the formic acid from the storage tank, through the bypass valve, through the mixer, and to the injection port.

In the first aspect of the present invention, the electrolysis system may further comprise a control system in communication with the contamination mitigation system and configured to adjust a concentration of the formic acid solution and a sensor in fluid communication with the electrolyzer stack to measure water conductivity data related to water entering the electrolyzer stack. In the first aspect of the present invention, the control system may be in communication with the sensor to receive the water conductivity data therefrom. In the first aspect of the present invention, the control system may be configured to adjust the concentration of the formic acid solution based, at least in part, on the water conductivity data.

In the first aspect of the present invention, the contamination mitigation system may further include a recirculation line extending between an outlet port of the electrolyzer stack and the storage tank and a three-way valve coupled to the recirculation line between the outlet port and the storage tank. In the first aspect of the present invention, the three-way valve may be configured to direct the formic acid from the outlet port to the storage tank via the recirculation line while the three-way valve is in a first position, and the three-way valve may be configured to direct the formic acid from the outlet port to a high pressure water separator included in the electrolysis system while the three-way valve is in a second position different than the first position.

In the first aspect of the present invention, the electrolysis system may further comprise a control system in communication with the contamination mitigation system and configured to control injection of the formic acid into the cathode compartment of the electrolyzer stack and a sensor in fluid communication with the electrolyzer stack to measure water conductivity data related to water entering the electrolyzer stack. In the first aspect of the present invention, the control system may be in communication with the sensor to receive the water conductivity data therefrom. In the first aspect of the present invention, the control system may be configured to adjust the injection of the formic acid into the cathode compartment based, at least in part, on the water conductivity data. In the first aspect of the present invention, the contamination mitigation system may further include a filter located upstream of the storage tank and configured to filter the formic acid. In the first aspect of the present invention, the storage tank may include a relief valve configured to manage pressure buildup due to decomposition of the formic acid in the storage tank.

In the second aspect of the present invention, the method may further comprise, before the step of injecting, directing the formic acid from a storage tank toward the cathode compartment of the electrolyzer stack. In the second aspect of the present invention, the method may further comprise, while a bypass valve located between the storage tank and the injection port is in a first position, directing the formic acid from the storage tank, through the bypass valve, and directly into the cathode compartment of the electrolyzer stack. In the second aspect of the present invention, the method may further comprise, while the bypass valve is in a second position different than the first position, directing the formic acid from the storage tank, through the bypass valve, and into a mixer.

In the second aspect of the present invention, the method may further comprise directing water from a water tank into the mixer and diluting the formic acid with the water in the mixer to create a formic acid solution that is injected into the cathode compartment. In the second aspect of the present invention, the method may further comprise receiving water conductivity data related to water entering the electrolyzer stack and adjusting a concentration of the formic acid solution being injected into the cathode compartment of the electrolyzer stack based, at least in part, on the water conductivity data.

In the second aspect of the present invention, the method may further comprise receiving water conductivity data related to water entering the electrolyzer stack and adjusting the injection of the formic acid into the cathode compartment of the electrolyzer stack based, at least in part, on the water conductivity data. In the second aspect of the present invention, the step of injecting formic acid includes manually injecting the formic acid into the cathode compartment of the electrolyzer stack via the injection port. In the second aspect of the present invention, the method may further comprise directing the formic acid toward the cathode compartment of the electrolyzer stack via a pump.

The features illustrated or described in connection with one exemplary embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical, and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of' or "consists of' refers to a compound, composition, formulation, or method that excludes the presence of any additional elements, components, or method steps. The term "consisting of' also refers to a compound, composition, formulation, or method of the present disclosure that excludes the presence of any additional elements, components, or method steps.

The phrase "consisting essentially of' or "consists essentially of' refers to a composition, compound, formulation, or method that is inclusive of additional elements, components, or method steps that do not materially affect the characteristic(s) of the composition, compound, formulation, or method. The phrase "consisting essentially of' also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal language of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. An electrolysis system comprising:
an electrolyzer stack including an injection port fluidly connected with a cathode compartment of the electrolyzer stack, and
a contamination mitigation system configured to remove ions from the electrolyzer stack to mitigate ion contamination in the electrolyzer stack, the contamination mitigation system including a storage tank including formic acid therein, an injection line fluidly coupled between the storage tank and the injection port, and a pump coupled to the injection line and configured to direct the formic acid to the injection port from the storage tank for injection into the cathode compartment of the electrolyzer stack.

2. The electrolysis system of claim 1, wherein the contamination mitigation system further includes a mixer located downstream of the storage tank and configured to receive the formic acid from the storage tank and water from a water tank included in the electrolysis system to dilute the formic acid in the mixer and create a formic acid solution.

3. The electrolysis system of claim 2, wherein the contamination mitigation system further includes a bypass valve located between the storage tank and the mixer, and wherein the injection line includes a first branched injection line configured to direct the formic acid from the storage tank, through the bypass valve, and directly to the injection port without passing through the mixer and a second branched injection line configured to direct the formic acid from the storage tank, through the bypass valve, through the mixer, and to the injection port.

4. The electrolysis system of claim 2, further comprising a control system in communication with the contamination mitigation system and configured to adjust a concentration of the formic acid solution and a sensor in fluid communication with the electrolyzer stack to measure water conductivity data related to water entering the electrolyzer stack; optionally wherein the control system is in communication with the sensor to receive the water conductivity data therefrom, and wherein the control system is configured to adjust the concentration of the formic acid solution based, at least in part, on the water conductivity data.

5. The electrolysis system of any preceding claim, wherein the contamination mitigation system further includes a recirculation line extending between an outlet port of the electrolyzer stack and the storage tank and a three-way valve coupled to the recirculation line between the outlet port and the storage tank; optionally wherein the three-way valve is configured to direct the formic acid from the outlet port to the storage tank via the recirculation line while the three-way valve is in a first position, and the three-way valve is configured to direct the formic acid from the outlet port to a high pressure water separator included in the electrolysis system while the three-way valve is in a second position different than the first position.

6. The electrolysis system of claim 1, further comprising a control system in communication with the contamination mitigation system and configured to control injection of the formic acid into the cathode compartment of the electrolyzer stack and a sensor in fluid communication with the electrolyzer stack to measure water conductivity data related to water entering the electrolyzer stack; optionally wherein the control system is in communication with the sensor to receive the water conductivity data therefrom, and wherein the control system is configured to adjust the injection of the formic acid into the cathode compartment based, at least in part, on the water conductivity data.

7. The electrolysis system of any preceding claim, wherein the contamination mitigation system further includes a filter located upstream of the storage tank and configured to filter the formic acid.

8. The electrolysis system of any preceding claim, wherein the storage tank includes a relief valve configured to manage pressure buildup due to decomposition of the formic acid in the storage tank.

9. A method comprising:
providing an electrolyzer stack including an injection port fluidly connected with a cathode compartment of the electrolyzer stack,
injecting formic acid into the cathode compartment of the electrolyzer stack via the injection port, and
removing ions from the electrolyzer stack via the formic acid to mitigate ion contamination in the electrolyzer stack.

10. The method of claim 9, further comprising, before the step of injecting, directing the formic acid from a storage tank toward the cathode compartment of the electrolyzer stack.

11. The method of claim 10, further comprising, while a bypass valve located between the storage tank and the injection port is in a first position, directing the formic acid from the storage tank, through the bypass valve, and directly into the cathode compartment of the electrolyzer stack.

12. The method of claim 11, further comprising, while the bypass valve is in a second position different than the first position, directing the formic acid from the storage tank, through the bypass valve, and into a mixer.

13. The method of claim 12, further comprising directing water from a water tank into the mixer and diluting the formic acid with the water in the mixer to create a formic acid solution that is injected into the cathode compartment; optionally the method further comprising receiving water conductivity data related to water entering the electrolyzer stack and adjusting a concentration of the formic acid solution being injected into the cathode compartment of the electrolyzer stack based, at least in part, on the water conductivity data.

14. The method of claim 9, further comprising receiving water conductivity data related to water entering the electrolyzer stack and adjusting the injection of the formic acid into the cathode compartment of the electrolyzer stack based, at least in part, on the water conductivity data.

15. The method of any one of claims 9 to 14, wherein: (i) the step of injecting formic acid includes manually injecting the formic acid into the cathode compartment of the electrolyzer stack via the injection port; and/or (ii) the method further comprises directing the formic acid toward the cathode compartment of the electrolyzer stack via a pump.
